# EUROPEAN PATENT APPLICATION

(11) **EP 4 838 880 A1**
(43) Date of publication of application: **11.11.2026**
(21) Application number: 25175415.6
(22) Date of filing: 09.05.2025
(51) Int. Cl.: H04N 13/239

(54) **STEREO CAMERA DEVICE**

(71) Applicant: Xovis AG, 3052 Zollikofen (CH)
(72) Inventor: Hagen, Stefan, 3078 Richigen (CH); Löffel, Benny, 4622 Egerkingen (CH)
(74) Representative: Keller Schneider Patent- und Markenanwälte AG

(57) **Abstract**

A stereo camera device (1) comprises a housing (10), two camera units (20.1, 20.2), each of the units (20.1, 20.2) comprising a lens unit (21.1, 21.2) and an image sensor and a carrier assembly (50) for the two camera units (20.1, 20.2), arranged within the housing. The two camera units (20.1, 20.2) are arranged in a distance along a longitudinal axis of the housing (10). The housing (10) features two openings (17.1, 17.2) on a front surface (12) thereof. The two camera units (20.1, 20.2) are arranged within the housing (10) in such a way that a distal end of the respective lens unit (21.1, 21.2) is aligned with a respective of the two openings (17.1, 17.2). The carrier assembly (50) is attached to the housing (10) in a central region of the housing (10), and each of the two camera units (20.1, 20.2) is attached to an end portion of a cantilever beam section of the carrier assembly (50), each of the cantilever beam sections provided at a cantilever beam (52.1, 52.2) extending substantially parallel to the front surface (12) of the housing (10). The construction has a simple mechanical buildup and minimizes misalignment of the camera units (20.1, 20.2) due to thermal effects.

## Description

### Technical field

The invention relates to a stereo camera device comprising a housing, two camera units, each of the units comprising a lens unit and an image sensor, and a carrier assembly for the two camera units, arranged within the housing. The two camera units are arranged in a distance along a longitudinal axis of the housing, the housing features two openings on a front surface thereof, and the two camera units are arranged within the housing in such a way that a distal end of the respective lens unit is aligned with a respective of the two openings.

### Background art

Stereo (stereoscopic) camera devices allow for three-dimensional video imaging of a certain region of interest. They include two cameras that are arranged in a certain distance from each other, wherein the two cameras capture images from an overlapping region. By processing the two images, a three-dimensional image, including depth information, may be generated.

The three-dimensional images may be used e.g. in monitoring and people counting applications. The camera device may be mounted to a ceiling, a wall and/or dedicated carrying structures. They may be used in various embodiments, including airports, train stations, retail shops or public environments.

Usually, precise three-dimensional information is required. This requires precise alignment of the two cameras. One challenge to precise alignment are thermal effects on the components of the camera device for mounting the cameras, e.g. due to varying ambient temperatures. Therefore, measures have been developed to cope with such thermal effects in stereo cameras.

For instance, EP 4 074 018 B1 (Quantaflow) proposes a stereoscopic video system featuring a frame that is intended to be fixed to the ceiling, a cover fixed to the frame and having two windows and a bar at each of the ends of which are fixed an optic, an additional printed circuit board (PCB) and a video sensor for each optic. A printed circuit is fixed to the frame by three screws and connected to the two additional PCBs by an electric ribbon cable. The bar has a bore for guiding a screw fixing the PCB to the frame. However, the bar is floating on the frame, in order to avoid that deformations of the PCB caused by thermal effects lead to misalignment of the two optics.

As a further example, US 10,728,435 B2 (Shoppertrak) discloses a stereo camera including a cover that is coupled to a mount, wherein the cover surrounds the stereo camera unit. The latter includes a circuit board that is coupled to a frame. A floating board-section of the circuit board is attached to the mount using two pillars mounted in a mutual distance. Flexible interconnects accommodate expansion and contraction in the frame.

However, the construction of the prior art devices is rather complicated or requires considerable space.

### Disclosure of the invention

The object of the invention is thus to provide a stereo camera device the imaging precision of which is insensitive to thermal influences and that has a simple and compact construction.

The solution to the problem is defined by the features of claim 1. According to the invention, the carrier assembly is attached to the housing in a central region of the housing, and each of the two camera units is attached to an end portion of a cantilever beam section of the carrier assembly, each of the cantilever beam sections provided at a cantilever beam extending substantially parallel to the front surface of the housing.

The optical axes of the camera units are oriented substantially perpendicular to the front surface of the housing. The distal ends of the camera units, which may be constituted by a surrounding ring and/or a front glass of the lens unit, may be located behind the front surface, in a common plane with the front surface or in front of the front surface. A location in front of the front surface is preferred, as this allows for a large field-of-view, unobstructed by the device's housing.

The central region of the housing, where the carrier assembly is attached, includes a section of the housing located within a maximum distance from the center of the housing, along the longitudinal axis of the housing, which connects the two optical axes of the camera units. In particular, the maximum distance is 15% of the longitudinal extension of the housing or less, in particular 10% or less. In particular, the carrier assembly is exclusively attached to the housing in this central region, and there are no further attachment locations between the carrier assembly and the housing outside of this region.

The carrier assembly may be directly attached to a housing part providing an outer surface of the housing and/or to a base plate of the housing, which mounts the outer element or outer elements of the housing.

In particular, the camera units of the stereo camera have a large field of view (FOV), in particular an FOV of 120° or more, in particular 150° or more. This may be obtained by using so-called "fisheye" lens systems. A large FOV allows for capturing a large area by a single stereo camera device.

Due to the localized attachment of both camera units in a common attachment region, thermal effects are expected to affect both camera units in a very similar way. Furthermore, due to the independent support assembly, deformations of the housing do not affect the positioning of the optical elements. Accordingly, misalignment of the camera units due to thermal effects is minimized. At the same time, the inventive solution allows for a simple mechanical buildup compared to prior art solutions.

Preferably, the carrier assembly comprises a unitary beam providing both the cantilever beam sections for attaching the two camera units. This improves the mechanical stability of the device and avoids potential misalignments if the two cantilever beam sections are provided by separate elements. Furthermore, the buildup of the device is simplified.

Nevertheless, embodiments with two beams for providing one cantilever beam section each are also possible.

Preferably, the carrier assembly comprises a central support for attaching the carrier assembly to the housing, the cantilever beam or cantilever beams being supported by the central support. The central support is arranged substantially at the longitudinal center of the housing. This allows for a symmetric arrangement of the cantilever beam sections. In particular, the central support mounts the unitary beam or the two beams providing the cantilever beam sections in such a way that the cantilever beam sections protrude freely from the central support and have no further attachment points in addition to the central support.

Alternatively, if two cantilever beams are present, they may be attached to the housing with separate supports. These separate supports may be arranged slightly offset the longitudinal center of the housing.

Preferably, the central support is attached to a part of the housing providing the front surface of the housing. This allows for a particularly simple buildup of the device. Furthermore, the reference plane of the camera units is directly and easily accessible from the outside.

The central support may be attached directly to a wall providing the front surface and/or to sidewalls that are unitarily connected to the wall providing the front surface.

In alternative embodiments, the central support is attached to a back wall of the housing or a separate base plate arranged behind the carrier assembly.

Preferably, a main extension of the cantilever beam or the cantilever beams extends perpendicular to a main extension of the central support. This allows for a stable attachment with a small extension of the central support along the longitudinal axis of the housing.

In particular, the central support extends symmetrically from the beam(s) in opposing perpendicular directions. Preferably, the central support is attached to the housing in free end regions of the extending sections.

Preferably, each ratio of a free length of the cantilever beam section to a longitudinal extension of the housing is at least 0.3. The free length is defined as the length along the longitudinal axis of the respective beam, which is not supported by elements linked to the housing. It extends from the outermost location of the supporting elements (e.g. the outer end of the central support) to at least the camera unit supported by the respective cantilever beam section.

Preferably, each ratio of a free length of the cantilever beam section to a longitudinal extension of the respective opening is at least 3.0, in particular at least 4.0.

The comparatively long free cantilevered section ensures that the camera units are essentially attached to the housing only in a small attachment area. It is expected that thermal effects in this small area are substantially uniform and thus the effects on both camera units will be substantially identical. Therefore, misalignments due to thermal effects affecting the two camera units differently are avoided.

Preferably, each of the camera units comprises a printed circuit board (PCB) carrying the image sensor, wherein the printed circuit board is attached to the respective cantilever beam section, in particular on a side of the cantilever beam section opposed from the wall of the housing providing the front surface of the housing. In particular, the PCB carries the image sensor and includes electronics for pre-processing sensor data. Arranging the PCB on the rear side of the cantilever beam section maximizes the space that is available for the lens unit without increasing the thickness of the device along the optical axis. Attachment of the local PCB to the cantilever beam section may be direct or indirect, e.g. by attaching the lens unit of the camera unit and attaching the PCB to the rear end of the lens unit.

Preferably, a section of the lens unit is displaceable in the respective opening, along the respective optical axis. This avoids restricting movements of the cantilever beam sections by interactions with the housing, which again may lead to misalignment of the camera units.

Preferably, the stereo camera device comprises a flexible sealing element, sealing a gap between the lens unit and an edge of the opening. This allows for sealing the interior of the housing against the ingress of dust and potentially humidity. At the same time, the flexibility of the sealing element ensures that the camera units are freely movable in the opening regions.

In preferred embodiments, a main printed circuit board is accommodated between a wall of the housing providing the front surface of the housing and the cantilever beam sections of the carrier assembly. This provides space for mounting the camera units on a front surface of the cantilever beam sections without increasing the overall height of the housing in a direction perpendicular to its main surfaces.

The footprint of the main printed circuit board may extend outside of the footprint of the cantilever beam sections to use the available footprint of the housing. In particular, the main printed circuit board is attached to the housing independently from the carrier assembly for the camera units.

Preferably, the two camera units are connected to the main printed circuit board by ribbon cables. This ensures that essentially no mechanical forces are transmitted between the housing and the camera units independent from the dedicated carrier assembly.

In preferred embodiments, the cantilever beam or the cantilever beams include two openings for the ribbon cables to pass through. This allows for easily guiding the ribbon cables from a front side of the beam or the beams to a rear side thereof. In a particularly preferable embodiment, the main PCB is arranged between the front wall of the housing and the cantilever beam sections, the main PCB includes connectors for ribbon cables on its rear surface, opposite the front wall of the housing, and the PCBs associated with the camera units are arranged at the rear side of the cantilever beam sections and feature connectors on their rear surface. The ribbon cables are guided from the respective connector on the main PCB through the respective opening in the respective cantilever beam and then to the connector on the camera unit PCB. This allows for using short ribbon cables in a straight configuration.

Further advantageous embodiments and combinations of features of the invention result from the following exemplary embodiments and the set of patent claims as a whole.

### Brief description of the drawings

The drawings used to illustrate the exemplary embodiments show:
- Fig. 1: an oblique view of a first embodiment of a stereo camera device according to the invention;
- Fig. 2: a rear view of the device, with removed rear cover;
- Fig. 3: a schematic front view showing the arrangement of the central PCB and the camera units in the housing of the device;
- Fig. 4: a further schematic front view showing the carrier assembly for the camera units and its arrangement in the housing;
- Fig. 5A: a cross-sectional view of the device, along a longitudinal axis connecting the two optical axes;
- Fig. 5B: an enlarged portion of Fig. 5A; and
- Fig. 6: an oblique view of a second embodiment of a stereo camera device according to the invention.

In general, identical parts are marked with the same reference symbols in the figures.

### Ways to carry out the invention

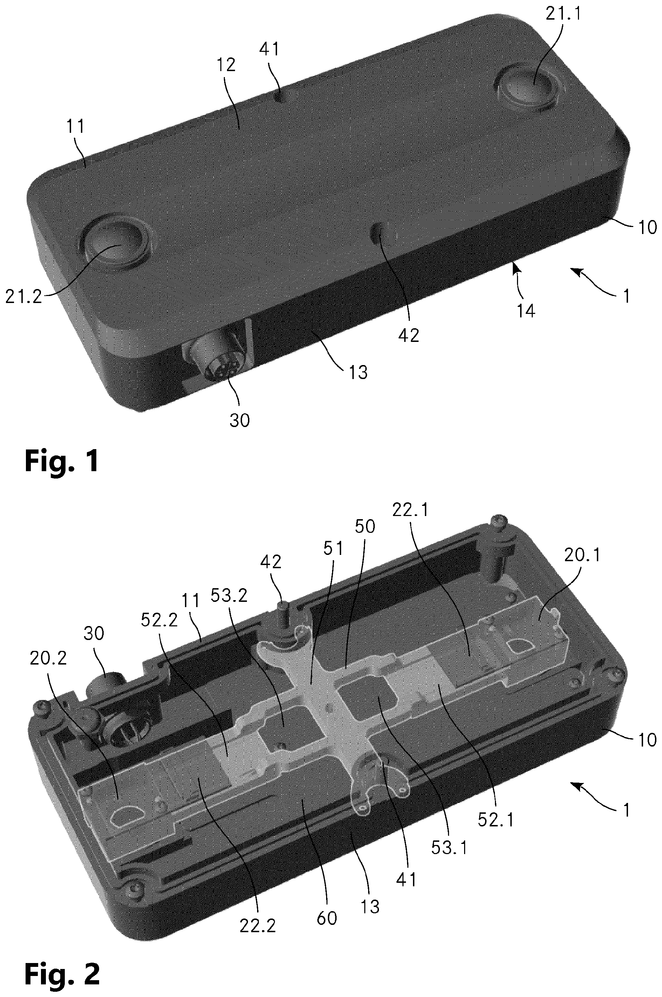

Figure 1 is an oblique view of a first embodiment of a stereo camera device according to the invention. The stereo camera device 1 includes a housing 10 made of aluminum that includes a front part 11 including a front surface 12 and side walls 13 as well as by a rear part 14 providing the rear cover of the housing 10. The rear part 14 is adapted to be attached to a stationary object such as a ceiling. The footprint of the housing 10 is basically rectangular, with rounded corners. The outside shape in planes parallel to the front surface 12 is substantially constant.

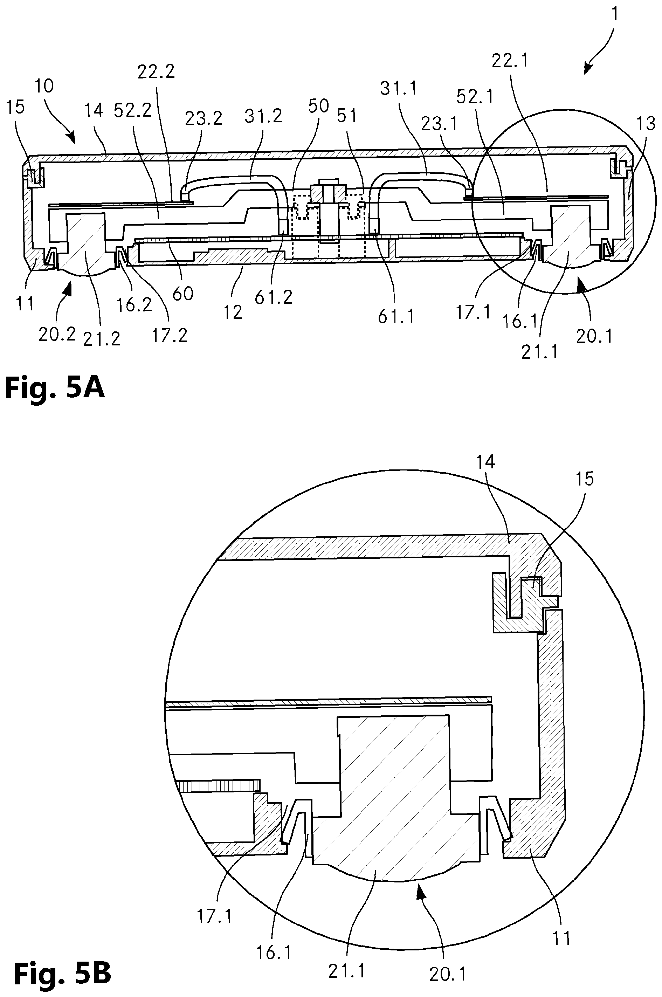

Two camera units are accommodated in the housing 10 as will be described in more detail below. Their lens units 21.1, 21.2 are visible from the outside, partially penetrating through openings 17.1, 17.2 in the front surface 12 of the housing 10 (cf. Fig. 5A). The front surface 12 will be turned away from the mounting surface such as the ceiling and thus directed to an area to be monitored. The lens units 21.1, 21.2 are arranged along the longitudinal central axis of the device, in regions neighbouring the respective sidewall perpendicular to the longitudinal axis, to achieve maximum separation of the optical axes of the lens units 21.1, 21.2.

The front part 11 is attached to further parts of the housing 10 by two screws 41, 42 accommodated in respective openings in the front side 12. Furthermore, a connector 30 for connecting the device to a power source and/or means for communicating and/or processing data is arranged on a sidewall 13 of the housing 10.

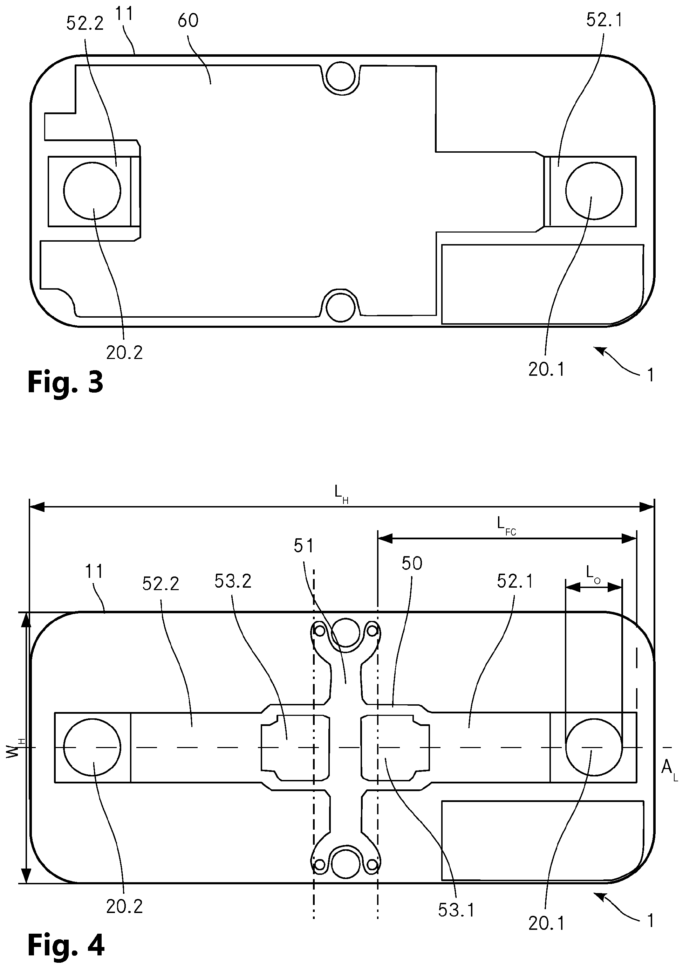

Figure 2 is a rear view of the device, with removed rear cover. In this illustration, the carrier assembly is shown partially transparent in order not to obstruct the view on further components. See also Figure 4, which is a further schematic front view showing the carrier assembly for the camera units and its arrangement in the housing.

The carrier assembly 50 is made from die-cast aluminum. It is essentially cross-shaped with a central part 51 extending perpendicular to the longitudinal axis of the housing 10 of the stereo camera device 1 and with two cantilever arms 52.1, 52.2 extending on both sides of the central part 51, in a direction parallel to the longitudinal axis. The geometry and arrangement of the carrier assembly 50 is symmetric, i. e. the two cantilever arms 52.1, 52.2 are formed and arranged essentially symmetric to the central longitudinal axis of the device, and the central part 51 extends through the center of the device, measured along the longitudinal axis.

With both the free ends of its central part 51, the carrier assembly 50 is attached to mounting posts arranged on the respective sidewalls 13 of the housing 10. For that purpose, the free ends of the central part 51 feature fork-like structures that partially enclose a respective central post accommodating the screw 41, 42 for attaching the front part 11 of the housing to the rear part. The ends of the fork-like structures feature through holes, which accommodate attachment screws that mate with threads, provided in the mentioned posts neighbouring the central post. There is no further attachment of the carrier assembly 50 to the housing 10 except in these two regions at the free ends of the central part 51.

In a region neighbouring the central part 51, the two cantilever arms 52.1, 52.2 feature a substantially quadratic opening 53.1, 53.2. It is used for passing cables from the front side of the support assembly 50 to the rear side thereof as will be described further below. In their outer regions, the two cantilever arms 52.1, 52.2 carry the camera units 20.1, 20.2. For that purpose, each of the cantilever arms 52.1, 52.2 features an accommodation for the lens unit 21.1, 21.2 of the respective camera unit 20.1, 20.2 (cf. Fig. 5A). The local PCB 22.1, 22.2 of the camera unit 20.1, 20.2 is attached to the rear side of the cantilever arm 52.1, 52.2, i. e. the side that is opposite the front surface of the device.

Further, a central printed circuit board (PCB) 60 is arranged between the front wall of the housing 10 and the carrier assembly 50. It is attached by screws to three posts extending from the inner surface of the front wall of the front part 11 of the housing 10.

As can be seen from Figure 4, the outside dimensions of the housing are the length L_{H} along the longitudinal axis A_{L} and the width W_{H} perpendicular thereto. The length of the free section of a cantilever arm is denoted by L_{FC}, whereas the longitudinal extension of the opening for the respective lens unit is L_{O}. In the first embodiment described in connection with Figures 1-5, the ratios characterizing its geometry are as follows: ${L}_{H} / {W}_{H} = 2.3 ;$ ${L}_{FC} / {L}_{H} = 0.4 ;$ ${L}_{FC} / {L}_{O} = 4.6 .$

Figure 3 is a schematic front view showing the arrangement of the central PCB and the camera units in the housing of the device, as seen from the front side.

The central PCB 60 extends over almost one half of the housing's footprint, exposing substantially only the distal end of the respective cantilever arm 52.2 with the camera unit 20.2 by means of a cutout. In the other half, the central PCB 60 extends in a first, inner region neighbouring the center of the housing, wherein the PCB extends substantially over the entire width and in a second, outer region, where the width of the central PCB 60 about corresponds to the width of the respective cantilever arm 52.1.

Figure 5A is a cross-sectional view of the device, along the central longitudinal axis connecting the two optical axes. Figure 5B is an enlarged portion of Fig. 5A, showing the sealing of the openings in the front surface, penetrated by the lens units of the camera units.

The housing 10 includes the front part 11, which includes the wall providing the front surface 12 and the sidewalls 13. It further includes the rear part 14. Both the front part 11 and the rear part 14 are attached to a rectangular frame 15.

As described above, the carrier assembly 50 is attached to the sidewalls 13 of the front part 11. Its central part 51 extends in a first plane parallel to the front surface 12, whereas its cantilever arms 52.1, 52.2 extend in a second plane parallel to the front surface 12, which is slightly closer to the front surface 12. Correspondingly, the sections are linked to each other by transition sections, running in an oblique direction with respect to the front surface 12. The central PCB 60 features two connectors 61.1, 61.2, which link the central PCB 60 with connectors 23.1, 23.2 on the two local PCBs 22.1, 22.2 of the camera units 20.1, 20.2 by means of ribbon cables 31.1, 31.2. These ribbon cables 31.1, 31.2 penetrate the opening 53.1, 53.2 in the respective cantilever arm 52.1, 52.2.

The lens units 21.1, 21.2 are accommodated in the cantilever arms 52.1, 52.2, whereas the local PCBs 22.1, 22.2 with the image sensors are attached to the rear side of the cantilever arms 52.1, 52.2. The support assembly 50, in particular the cantilever arms 52.1, 52.2, may accommodate thermal effects, which may lead to both cantilever arms 52.1, 52.2 slightly deforming in essentially the same way. This in turn may lead to slight movements of the respective lens units 21.1, 21.2. These are not hindered by the housing 10 because the lens units 21.1, 21.2 may slightly move within the openings 17.1, 17.2 in the front surface wall accommodating them due to the dimensions of the openings being slightly bigger than the cross-section of the respective part of the lens unit 21.1, 21.2. In order to ensure that the inside of the housing 10 is sealed against the ingress of dust or humidity, flexible seals 16.1, 16.2 from a rubber material are arranged between the opening 17.1, 17.2 and the lens unit 21.1, 21.2. The seals are annular form sealing elements with a V-shaped cross section, which ensure sealing but allow for movements of the lens units 21.1, 21.2 in directions along and perpendicular to the respective optical axis.

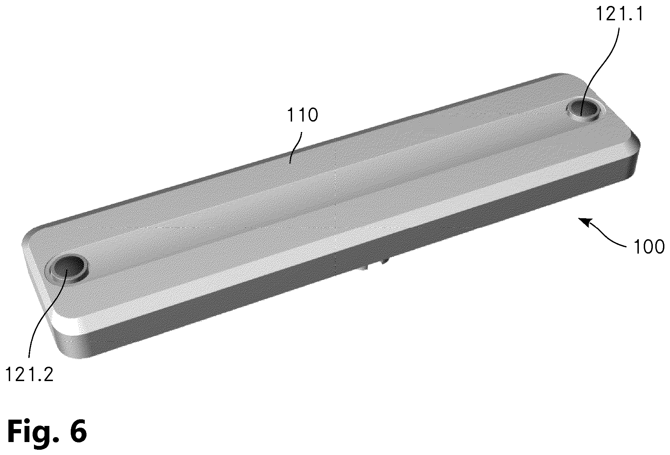

Figure 6 is an oblique view of a second embodiment of a stereo camera device according to the invention. In many aspects, the stereo camera device 100 has the same construction and functionality as the device according to the first embodiment, described in connection with Figures 1-5. However, the housing 110 is more elongated, in order to provide a larger separation distance between the camera units and thus the lens units 121.1, 121.2. This allows for capturing stereoscopic image data providing three-dimensional image information if the distance from the camera device to the scene to be monitored is large. In particular, the device according to the first embodiment is designed for use in a ceiling-mounted configuration at ceiling heights of up to about 6-9 m, whereas the device according to the second embodiment is designed for use in a ceiling-mounted configuration at ceiling heights of more than 9 m.

As can be seen from Figure 4, the outside dimensions of the housing are the length L_{H} along the longitudinal axis A_{L} and the width W_{H} perpendicular thereto. The length of the free section of a cantilever arm is denoted by L_{FC}, whereas the longitudinal extension of the opening for the respective lens unit is L_{O}. In the second embodiment described in connection with Figure 6, the ratios characterizing its geometry (cf. Fig. 4 for the definition of the lengths) are as follows: ${L}_{H} / {W}_{H} = 4.3 ;$ ${L}_{FC} / {L}_{H} = 0.5 ;$ ${L}_{FC} / {L}_{O} = 8.7 .$

In both embodiments, images are captured by the image sensors of the two camera units and preprocessed on the local PCB. By means of the respective ribbon cable, the image data is transmitted to the central PCB where the image data of both camera units is further processed to obtain processed data. This data may then be transmitted by a communication module located on the central PCB. Transmittal may be effect through wired and/or wireless channels.

The invention is not restricted to the described embodiments. In particular, variants may be provided that have a sealed housing as the devices according to the first and second embodiment, employing seals between the lens units and the respective openings of the housing. These variants may be weatherproof / waterproof, e.g. fulfilling the requirements of IP 65. Other variants, in particular variants that are used indoor in substantially clean environments, may do without such sealings.

In summary, it can be stated that the invention provides a stereo camera device the imaging precision of which is insensitive to thermal influences and that has a simple and compact construction.

### List of reference signs

- 1: stereo camera device
- 10: housing
- 11: front part
- 12: front surface
- 13: sidewall
- 14: rear part
- 15: frame
- 16.1, 16.2: seal
- 17.1, 17.2: opening
- 20.1, 20.2: camera unit
- 21.1, 21.2: lens unit
- 22.1, 22.2: PCB
- 23.1, 23.2: connector
- 30: connector
- 31.1,31.2: cable
- 41,42: screw
- 50: carrier
- 51: central part
- 52.1, 52.2: cantilever arm
- 53.1, 53.2: opening
- 60: PCB
- 61.1, 61.2: connector
- 100: stereo camera device
- 110: housing
- 121.1, 121.2: lens unit

## Claims

1. Stereo camera device comprising
a) a housing;
b) two camera units, each of the units comprising a lens unit and an image sensor;
c) a carrier assembly for the two camera units, arranged within the housing; wherein
d) the two camera units are arranged in a distance along a longitudinal axis of the housing;
e) the housing features two openings on a front surface thereof;
f) the two camera units are arranged within the housing in such a way that a distal end of the respective lens unit is aligned with a respective of the two openings;
**characterized in that**
g) the carrier assembly is attached to the housing in a central region of the housing; and
h) each of the two camera units is attached to an end portion of a cantilever beam section of the carrier assembly, each of the cantilever beam sections provided at a cantilever beam extending substantially parallel to the front surface of the housing.

2. The stereo camera device as recited in claim 1, **characterized in that** the carrier assembly comprises a unitary beam providing both the cantilever beam sections for attaching the two camera units.

3. The stereo camera device as recited in claim 1 or 2, **characterized in that** the carrier assembly comprises a central support for attaching the carrier assembly to the housing, the cantilever beam or cantilever beams being supported by the central support.

4. The stereo camera device as recited in claim 3, **characterized in that** the central support is attached to a part of the housing providing the front surface of the housing.

5. The stereo camera device as recited in claim 3 or 4, **characterized in that** a main extension of the cantilever beam or the cantilever beams extends perpendicular to a main extension of the central support.

6. The stereo camera device as recited in any of claims 1 to 5, **characterized in that** each ratio of a free length of the cantilever beam section to a longitudinal extension of the housing is at least 0.3.

7. The stereo camera device as recited in any of claims 1 to 6, **characterized in that** each ratio of a free length of the cantilever beam section to a longitudinal extension of the respective opening is at least 3.0, in particular at least 4.0.

8. The stereo camera device as recited in any of claims 1 to 7, **characterized in that** each of the camera units comprises a printed circuit board carrying the image sensor, wherein the printed circuit board is attached to the respective cantilever beam section, in particular on a side of the cantilever beam section opposed from the wall of the housing providing the front surface of the housing.

9. The stereo camera device as recited in any of claims 1 to 8, **characterized in that** a section of the lens unit is displaceable in the respective opening, along the respective optical axis.

10. The stereo camera device as recited in claim 9, **characterized by** a flexible sealing element, sealing a gap between the lens unit and an edge of the opening.

11. The stereo camera device as recited in any of claims 1 to 10, **characterized in that** a main printed circuit board is accommodated between a wall of the housing providing the front surface of the housing and the cantilever beam sections of the carrier assembly.

12. The stereo camera device as recited in claim 11, **characterized in that** the two camera units are connected to the main printed circuit board by ribbon cables.

13. The stereo camera device as recited in claim 12, **characterized in that** the cantilever beam or the cantilever beams include two openings for the ribbon cables to pass through.
